# EUROPEAN PATENT SPECIFICATION

(11) **EP 0 471 434 B1**
(45) Date of publication and mention of the grant of the patent: **18.10.2000**
(21) Application number: 91305239.5
(22) Date of filing: 11.06.1991
(51) Int. Cl.: G06F 12/08

(54) **Method and apparatus for controlling a multi-segment cache memory**
Verfahren und Einrichtung zur Steuerung eines Mehrsegment-Cache-Speichers
Procédé et dispositif de commande d'une antémémoire à segments multiples

(30) Priority: 17.08.1990 US 568962
(43) Date of publication of application: 19.02.1992
(73) Proprietor: SEAGATE TECHNOLOGY INTERNATIONAL, Georgetown Grand Cayman Island (KY)
(72) Inventor: Hung, Fan Kee F. Seagate Technology Inc., Oklahoma City, OK 73127-9705 (US)
(74) Representative: Kenyon, Sarah Elizabeth

(56) References cited:
- EP-A- 0 066 766
- IBM TECHNICAL DISCLOSURE BULLETIN vol. 31, no. 8, January 1989, NEW YORK, US pages 462 - 466; 'Biasing Cache Threshold Pointers toward less Pre-staging'
- IBM TECHNICAL DISCLOSURE BULLETIN vol. 31, no. 8, January 1989, NEW YORK, US pages 462 - 466; 'Biasing Cache Threshold Pointers toward less Pre-staging'
- COMPUTER TECHNOLOGY REVIEW. vol. 6, no. 3, 1986, LOS ANGELES US pages 133 - 139; W.D.MOREN: 'Intelligent Controller for Disk Drives boosts Performance of Micros'
- COMPUTER TECHNOLOGY REVIEW. vol. 6, no. 3, 1986, LOS ANGELES US pages 133 - 139; W.D.MOREN: 'Intelligent Controller for Disk Drives boosts Performance of Micros'

## Description

The present invention relates to a method and apparatus for controlling a multi-segment cache memory.

Cache memories are used within computer storage systems. In a magnetic storage system, for example, the cache memory is located within the disk controller which controls operation of a magnetic disk drive. The disk controller is configured for connection with a host computer through a data bus, such as a small computer systems interface (SCSI). The disk controller passes data back and forth between the disk drive and the host computer in response to memory instructions or commands generated by the host computer.

The magnetic disk drive stores the data on the surface of a rotating magnetic disk. The disk surface includes a plurality of generally concentric data tracks. Each data track is divided into sectors or blocks. In one typical disk drive, each data track is divided into thirty five blocks, each block including 512 bytes of data. A byte of data is represented by an individual address in the storage system.

The memory instructions cause the disk controller to initiate read and write operations within the disk drive. Each memory instruction includes a starting address, a block length (the number of blocks required) and an instruction type, such as read or write. After the disk controller receives a read instruction, for example, the controller signals the disk drive to retrieve the required number of blocks beginning at the starting address. After the data has been retrieved, the disk drive controller passes the data back to the host computer.

The cache memory improves storage system performance by reducing the number of times the controller must go to the disk to retrieve data. The cache memory stores the most recently accessed data in a random access memory (RAM). When the host computer runs a particular software application, the input/output pattern seen by the disk drive controller tends to repeat. Therefore, there is a greater chance that data obtained from the disk will be used again. When the host computer requests retrieval of data that is in the cache memory, the controller does not have to retrieve the information from the disk but can retrieve it directly from the cache memory. Because the cache memory has a much faster data access time than the disk drive, retrieving the data directly from the cache memory substantially reduces the data access time seen by the host computer.

The cache memory includes a cache buffer and a cache table. In one version, the cache buffer can store up to 192K bytes of data. The cache table maintains a list of the data present in the cache buffer by recording the starting addresses of the data retrieved from the disks. When the controller receives a write instruction that corresponds to addresses present in the cache memory, it up-dates the cache table such that it no longer indicates the data is present within the buffer. This prevents old data from being read from the cache buffer.

When the controller receives a read instruction, it refers to the cache table to determine whether the requested data is present in the cache buffer. If the data is not present in the cache buffer (cache miss), the controller retrieves the data from the disk and relays the data to the host computer. The controller also loads the data into the cache buffer and up-dates the cache table. A cache hit occurs when the data requested by the host computer is present in the cache buffer. In this situation, the controller receives the information directly from the buffer and transmits the data to the host computer. The ratio of cache hits to cache misses is a measure of cache memory performance.

In a multi-segment cache, the cache buffer is divided into segments. The number of segments in the cache buffer is known as the segmentation level. By segmenting the cache buffer, the controller can perform "look ahead" operations by retrieving excess blocks to fill an entire segment. Because memory operations tend to form repetitive and somewhat predictable patterns, the host computer is likely to request data from the next consecutive blocks. The segmentation level determines the number of blocks in each segment and therefore determines the number of excess blocks retrieved. The greater the segmentation level, the smaller the number of blocks in each segment. Performance of the cache memory may be controlled by controlling the number of excess blocks retrieved in a read operation.

The optimum segmentation level depends upon the particular software application running on the host computer. Because the host computer frequently switches between various applications, a selected segmentation level may not achieve the desired performance over a wide range of applications. Therefore, a cache having an adaptive segment control is needed.

Heuristic programming is one method of controlling segmentation level. A statistical performance analysis is performed on the cache memory and these results are applied to a set of rules. The variables applied to the rules include, among others, the number of blocks in each read that are a cache hit and the number of blocks that are a cache miss. One example of heuristic programming to control segmentation level is given in an Article entitled "Intelligent Controllers for Disk Drives Boosts Performance of Micros" from Computer Technology Review, Summer 1986, No. 3 at pages 133 to 139. The article assesses the advantages of segmented cache buffers and suggests that it should be possible to maintain a record of the operations carried out by a storage system, carry out a statistical analysis of these operations and then alter the number and size of segments in the cache memory in dependence upon the statistics.

However, there is simply not enough information in a past statistical performance to predict a preferred segmentation level. Given that there are many exceptions to the rules, heuristic programs do not provide accurate and dependable results. Therefore, there is a continuing need for a multi-segment cache having improved segment control.

It is an object of the present invention to provide an adaptive segment control offering improved control of the performance of a multi-segment cache in a storage system.

According to a first aspect of the present invention, there is provided a method of controlling a cache memory in a storage system, comprising:
segmenting the cache memory into a number of segments of equal size to operate at a selected working segmentation level, the segmentation level corresponding to the number of segments;
receiving memory instructions transmitted by a host computer; characterised by:
storing the received instructions in an instruction queue;
configuring a first virtual cache table to operate at the selected working segmentation level;
configuring at least one further virtual cache table to operate at a selected test segmentation level, the test segmentation level(s) being different from the working segmentation level;
performing hit ratio simulations on the first and further virtual cache tables by executing a selected number of the stored instructions, to determine which virtual cache table obtains a highest hit ratio based upon the stored instructions; and
adjusting the working segmentation level to equal the segmentation level of the virtual cache table having the greater/greatest hit ratio value.

According to a second aspect of the present invention, there is provided an adaptive segment control assembly for controlling a multi-segment cache memory in a storage system, the assembly comprising:
means for segmenting the cache memory into a number of segments of equal size to operate at a selected working segmentation level, where the segmentation level corresponds to the number of segments;
means for receiving memory instructions transmitted by a host computer; characterised by:
means for storing the received instructions in an instruction queue;
means for configuring a first virtual cache table to operate at the selected working segmentation level;
means for configuring at least one further virtual cache table to operate at a selected test segmentation level, the test segmentation level(s) being different from the working segmentation level;
means for performing hit ratio simulations on the first and further virtual cache tables by executing a selected number of the stored instructions to determine which virtual cache table obtains a highest hit ratio based upon the stored instructions; and
means for adjusting the working segmentation level to equal the segmentation level of the virtual cache table having the greater/greatest hit ratio value.

A preferred embodiment of the invention, described below, features a controller which monitors memory instructions transmitted by a host computer and received by the storage system. The cache memory is configured to operate at a selected initial working segmentation level. A plurality of virtual cache tables are connected to receive the monitored memory instructions and are configured such that one table operates at the working segmentation level and the other tables operate at different segmentation levels. The monitored memory instructions are used to determine which of the virtual cache tables would obtain the highest hit ratio with its respective segmentation level. The working segmentation level is adjusted to equal the segmentation level of the virtual cache table having the highest hit ratio.

Any number of virtual cache tables greater or equal to 2 may be used in accordance with the present invention. In the described embodiment, there are two virtual cache tables. The first virtual cache table is segmented to operate at the selected working segmentation level. The second virtual cache table is segmented to operate at a selected test segmentation level, the test segmentation level being different from the working segmentation level. The test segmentation level is selected by indexing between entries within a look up table which includes all selectable segmentation levels. In the preferred embodiment, the selectable segmentation levels range from 1 to 16.

Preferably, a controller includes an instruction queue for storing the memory instructions received by the storage system. To ensure that the instructions stored in the instruction queue are current and representative of the application being executed by the host computer, the instruction queue is flushed after the number of instructions stored is equal to a queue limit, such as thirty instructions. After the instruction queue has been flushed, the controller continues to store instructions transmitted in the storage system.

Hit ratio simulations are performed on the first and second virtual cache tables by executing a selected number of instructions stored in the instruction queue. The storage system returns to an idle state where all instructions in the instruction queue have been simulated, and resumes hit ratio simulations after the next received instruction is stored in the instruction queue. This process is repeated until the selected number of instructions have been executed on the first and second virtual cache tables. For example, in one embodiment, one hundred instructions are simulated in the hit ratio simulations.

Hit ratio values are maintained during the hit ratio simulations and are compared after execution of the selected number of stored instructions. When the hit ratio value for the second virtual cache table is greater than the hit ratio value for the first virtual cache table, the working segmentation level is adjusted to equal the test segmentation level. The cache memory is then re-configured to operate at the new working segmentation level. Thereafter, the controller resumes the hit ratio simulations with the new working segmentation level and selects a new test segmentation level.

In one embodiment, the hit ratio simulations are only performed when the storage system is in an idle state. When the storage system receives a memory instruction from the host computer, it operates in a busy state by performing the requested memory operation. Simulation of an individual stored instruction is interrupted upon receipt of the instruction from the host computer. This prevents the hit ratio simulations from interfering with the memory operations. After completion of the memory operation, the storage system returns to the idle state. Thereafter, the interrupted simulation is resumed upon completion of the memory operation. The overhead added by the segment control is therefore minimal because simulation is performed only when the storage system is idle.

The present invention improves performance of a multi-segment cache memory by analysing the instruction pattern received from the host computer. Because the instruction pattern is representative of the application being executed by the host computer, the controller adapts the segmentation level of the cache to fit the current application. The present invention therefore provides an adaptive segment controls that is both accurate and dependable over a wide range of software applications.

The present invention is described further, by way of example, with reference to the accompanying drawings, in which:
Figure 1 is a diagram of a memory controller connected between a host computer and a memory device in accordance with the preferred embodiment;
Figure 2 is a diagram of the memory controller shown in Figure 1, including an adaptive segment control unit in accordance with the preferred embodiment;
Figures 3a and 3b, when joined, form a flow chart, which illustrates operation of the memory controller shown in Figures 1 and 2; and
Figure 4 is a flow chart of a simulation routine performed by the adaptive segment control unit shown in Figure 2.

The preferred embodiment provides an adaptive segment control unit (ASCU) for a multi-segment cache memory in a memory controller. The ASCU performs hit ratio simulations on virtual cache tables to determine the cache memory segmentation level that matches the software application being run on a connected host computer. The hit ratio simulations performs actual instructions received from the host computer on the virtual cache tables.

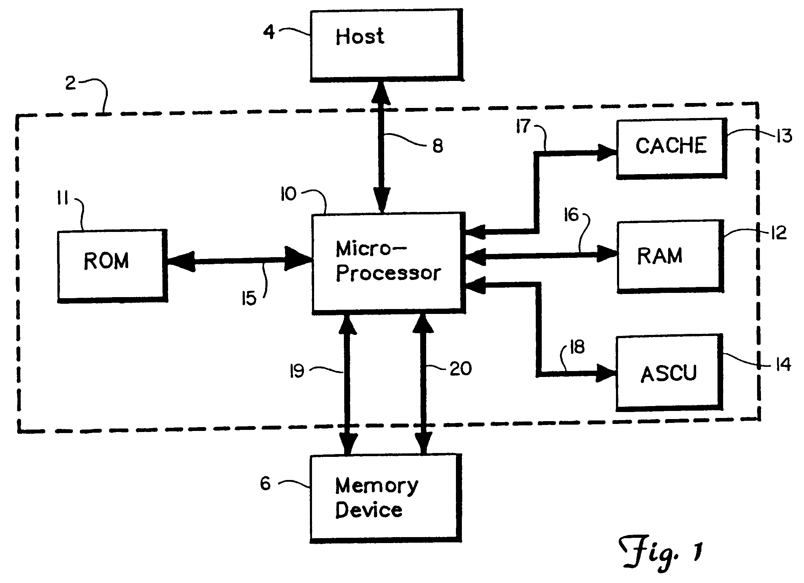

Figure 1 is a diagram of a memory controller 2 connected between a host computer 4 and a memory device 6. The memory controller 2 and the memory device 6 form a storage system for the host computer 4. The host computer 4 transmits memory instructions to the controller 2 through a data bus 8. The data bus 8 can be any known communications interface, such as a small computer systems interface (SCSI). The controller 2 includes a micro-processor 10, a read only memory (ROM) 11, a random access memory (RAM) 12, a cache memory 13, and an adaptive segment control unit (ASCU) 14. The ROM 11 is connected to the micro-processor 10 through data and address lines 15. The ROM 11 holds control software which operates the micro-processor 10 to perform memory operations in response to the memory instructions received from the host computer 4. The RAM 12 is connected to the micro-processor 10 through data and address lines 16. The cache memory 13 is connected to the micro-processor 10 through data and control lines 17. The adaptive segment control unit 14 is connected to the micro-processor 10 through data and control lines 18. The control software also operates the micro-processor 10 to control operation of the cache memory 13 and the adaptive segment control unit 14.

The memory device 6 is connected to the micro-processor 10 through control lines 19 and a data bus 20. The micro-processor 10 operates the memory device 6 to perform memory operations in response to memory instructions received from the host computer 4. During a read operation, the host computer 4 generates a read instruction, which is decoded by the micro-processor 10. The micro-processor 10 transmits control signals through the control lines 19 to the memory device 6, which causes the memory device to retrieve the requested data. The micro-processor 10 receives the data through the data bus 20 and returns the data to the host computer 4 through the data bus 8. Similarly, during a write operation, the host computer 4 generates a write instruction which is decoded by the micro-processor 10. The micro-processor 10 transmits write data to the memory device 6 through the data bus 20. The micro-processor 10 operates the memory device 6 through the control lines 19 to write the data to the desired memory locations within the memory device.

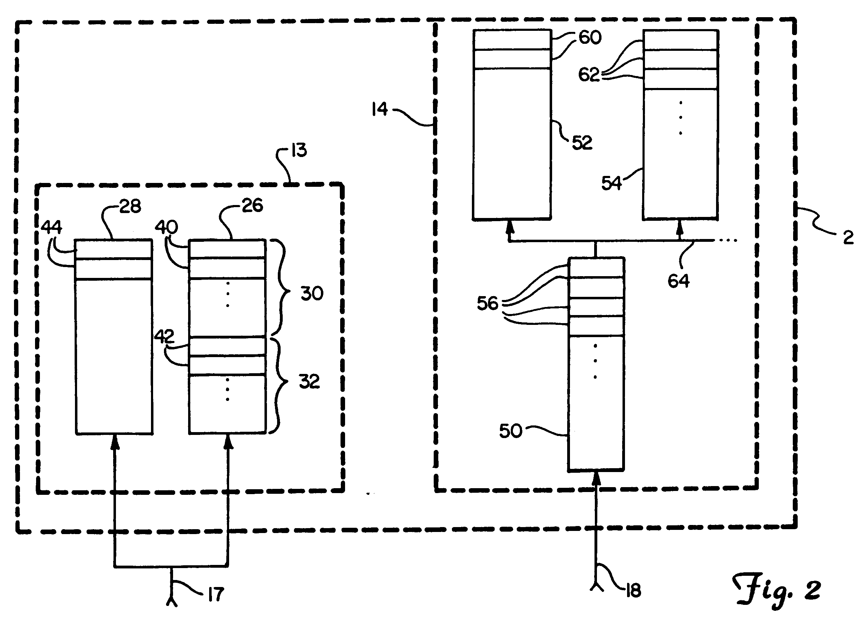

Figure 2 is a block diagram of parts of the memory controller 2 including the cache memory 13 and the adaptive segment control unit 14. The cache memory 13 stores the data most recently accessed from the memory device 6. Because the instruction pattern generated by the host computer 4 tends to repeat while it runs a particular software application, data stored in the cache memory 13 is likely to be used again by the host computer. If the data is requested again by the host computer 4, it can be retrieved directly from the cache memory 13 rather than from the memory device 6. Since data can be retrieved from the cache memory 13 much quicker than from the memory device 6, the cache memory can significantly increase storage system performance by reducing the average data access time.

The cache memory 13 includes a cache buffer 26 and cache table 28. The cache buffer 26 includes a plurality of storage locations 40 and 42 for storing data read from the memory device 6. In one embodiment, the cache buffer 26 can store up to 192K bytes of data. The cache memory 13 is a multi-segment cache. In other words, the cache buffer 26 is divided into segments. The number of segments is known as the segmentation level. For example, in the embodiment shown in Figure 2, the cache memory 13 has a segmentation level of 2, the cache buffer 26 being divided into segments 30 and 32. The segment 30 includes the storage locations 40. Similarly, the segment 32 includes the storage locations 42. The cache memory 13 can be configured with any segmentation level.

The memory device 6 (shown in Figure 1) reads data in blocks or sectors. In one embodiment, a block includes 512 bytes of data. A read instruction generated by the host computer 4 includes a starting address and a number of blocks requested. In response to each read instruction, the micro-processor 10 retrieves the requested number of blocks of data from the memory device 6, beginning at the starting address, and enough additional blocks to fill an entire segment of the cache buffer 26. Each storage location 40 and 42 in the buffer 26 can store a block of data. The segmentation level determines the number of blocks in each segment. The retrieval of additional blocks is known as "look ahead" operation. Because of particular application run by the host computer 4 tends to form a pattern of read and write instructions, the additional blocks stored in the cache buffer 26 have a relatively high probability of being used. Therefore, the look ahead operation further reduces the average data access time of the storage system.

The cache table 28 maintains a list of the data present in the cache buffer 26. The cache table 28 includes a plurality of storage locations 44 for storing the starting addresses of each segment of data stored in the cache buffer 26. The cache table 28 also stores the number of blocks of data within each segment in the cache buffer 26. The micro-processor 10 can determine from the cache table 28 whether a particular block of data is present in the cache buffer 26 by looking at the starting addresses and the number of blocks in each segment (or segmentation level). For a segmentation level of 2, the cache table 28 includes two starting addresses in locations 44. For a segmentation level of 3 (not shown), the cache table 28 includes three starting addresses.

When the micro-processor 10 receives a read instruction, it refers to the cache table 28 to determine whether the requested data is already present in the cache buffer 26. If the requested data is present in the cache buffer 26 (a cache hit), the controller 2 retrieves the requested data from the cache buffer and transmits the data to the host computer 4 through the data bus 8. If the cache table 28 indicates that the requested data is not present within the cache buffer 26, (a cache miss), the micro-processor 10 retrieves the requested data from the memory device 6 through the data bus 20. After the data has been retrieved, the micro-processor 10 stores the data in the cache buffer 26 and up-dates the cache table 28.

For the embodiment shown in Figure 2, a first read instruction causes the segment 30 of the cache buffer 26 to be filled with blocks of data from the memory device 6, beginning at the starting address specified in the instructions. A second read instruction causes the segment 32 to be filled, beginning at the starting address specified in the second read instruction. The starting addresses for each read instruction are stored in the cache table 28, along with the segmentation levels.

The adaptive segment control unit 14 improves cache memory performance by dynamically adjusting the segmentation level of the cache buffer 26. The optimum segmentation level varies, depending upon the particular software application being run by the host computer 4. Because the host computer 4 runs a variety of software applications, a selected segmentation level may not be optimal for all the applications. The adaptive segment control unit 14 monitors the instructions received by the micro-processor 10 and adapts the segmentation level of the cache memory 13 to fit the pattern of instructions received from the host computer 4.

The adaptive segment control unit 14 includes an instruction queue 50 and virtual cache tables 52 and 54. The instruction queue 50 includes a plurality of storage locations 56, each for storing an instruction received from the host computer 4. In one embodiment, the instruction queue 50 can store up to thirty consecutively received instructions. When the controller 2 is in an idle state, the adaptive segment control unit 14 performs hit ratio simulations on the virtual cache tables 52 and 54, based on the stored instructions. The results of the hit ratio simulations are used to adjust the working segmentation level of the cache memory 13 to fit the current software application being run by the host computer 4.

Prior to performing the hit ratio simulations, the virtual cache table 52 is segmented to the working segmentation level of the cache memory 13. In the embodiment shown in Figure 2, the working segmentation level of the cache memory 13 is equal to 2. Therefore, the virtual cache table 52 includes two storage locations 60 for storing two starting addresses. Similarly, the virtual cache table 54 includes storage locations 62 for storing starting addresses. The virtual cache table 54 is segmented to a selected test segmentation level which is different from the working segmentation level.

The hit ratio simulations are performed by simulating a selected number of stored instructions (simulation count) on the virtual cache tables 52 and 54. While simulating the instructions, the adaptive segment control unit 14 maintains a count of the number cache hits and the number of cache misses for each table 52 and 54. Because the tables 52 and 54 are segmented to different segmentation levels, the hit ratios (cache hits/cache misses) of each table will be different after the instructions have been simulated. If the hit ratio of the virtual cache table 54 is greater than the hit ratio of the virtual cache table 52 after the simulation count, the working segmentation level of the cache memory 13 is adjusted to equal the test segmentation bevel. After the hit ratio simulation is completed, the virtual cache table 52 is re-configured to the new working segmentation level and the virtual cache table 54 is re-configured to a new test segmentation level. The hit ratio simulations are then repeated with a new, current set of stored instructions.

The test segmentation level is selected from a look up table (not shown). The look up table contains all of the selectable segmentation levels. In one embodiment, the selectable segmentation levels range from 1 to 16. The adaptive segment control unit 14 indexes between elements in the look up table from one hit ratio simulation to the next. The entries can be indexed in any pre-selected order or in a random order.

In an alternative embodiment, the adaptive segment control unit 14 includes a plurality of virtual cache tables, as indicated by broken lines 64. In this embodiment, each table is configured to a different segmentation level. After the simulations are completed, the cache memory 13 is re-configured to a segmentation level equal to the segmentation level of the virtual cache table having the highest hit ratio.

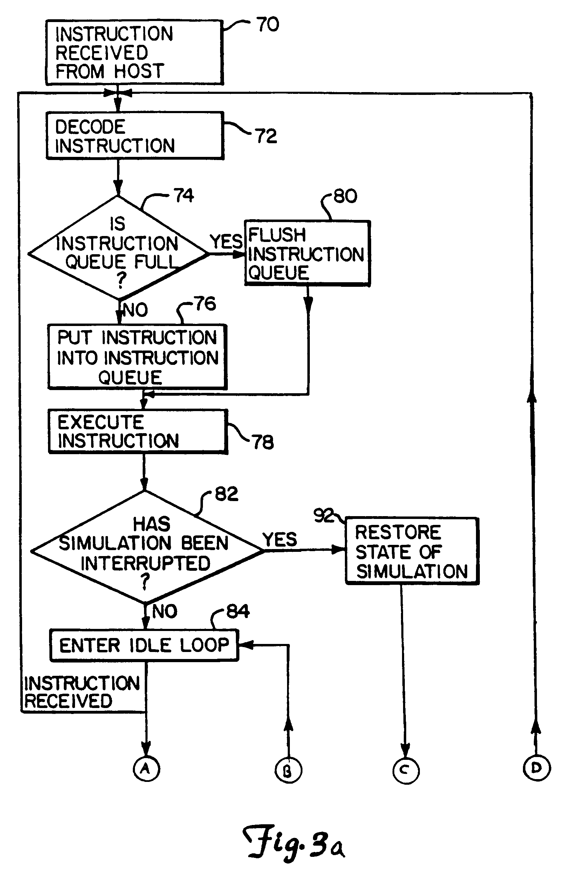

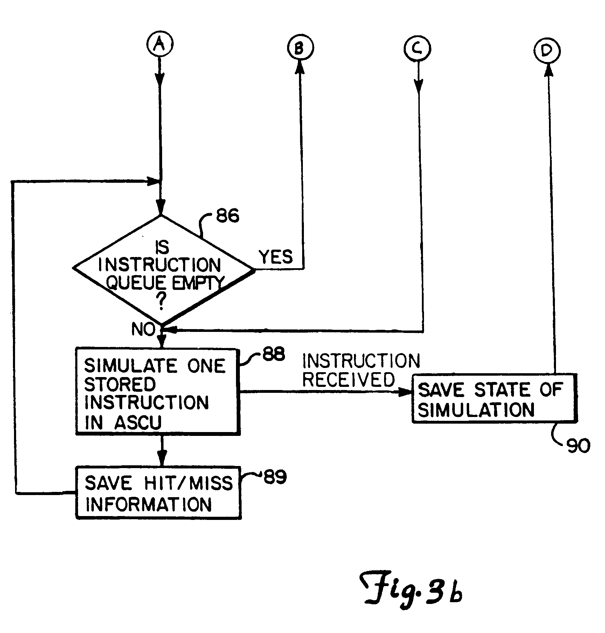

Figures 3a and 3b, when joined, form a flow chart, which illustrates the operation of the controller 2 in greater detail. At step 70, an instruction is received from the host computer 4 through the data bus 8. At step 72, micro-processor 10 decodes the instruction into a starting address, a block length and an instruction type. The different types of instructions include, among others, read and write instructions.

At step 74, the adaptive segment control unit 14 determines whether the instruction queue 50 is full. If not, the received instruction is stored in the instruction queue 50 at step 76. Next, the micro-processor 10 executes the received instruction by performing a memory operation at step 78. The micro-processor 10 operates in a busy state (normal operation) while it executes the received instruction to prevent interference from operation of the adaptive segment control unit 14.

If the instruction queue 50 is full at step 74, the adaptive segment control unit 14 flushes the instruction queue at step 80. Preferably, individual instructions are executed when the micro-processor 10 is in the idle state. If the micro-processor 10 is too busy to process the instruction simulations, the instruction queue 50 will fill up to the queue limit. By flushing the instruction queue 50 when it is full, the adaptive segment control unit 14 ensures that the instructions stored in the queue are current and representative of the particular application being run by the host computer 4.

After the instruction queue 50 has be flushed, the micro-processor 10 executes the received instruction at step 78. The adaptive segment control unit 14 waits until after a selected number of instructions (wait count) has been subsequently received to begin refilling the instruction queue 50. This allows the micro-processor 10 to return to a relatively inactive state before the received instructions are stored to further ensure that the instructions in the queue 50 are current.

At step 82, the adaptive segment control unit 14 determines whether an instruction simulation has been previously interrupted at step 90 (discussed in detail below). If not, the micro-processor 10 returns to an idle loop at step 84, in which it operates in the idle state. If an instruction is received from the host computer 4 while the micro-processor 10 is in the idle loop, the micro-processor 10 returns to step 72 to decode the received instruction.

If no instruction is received from the host computer 4, the adaptive segment control unit 14 determines whether there is an instruction to simulate in the queue 50 (step 86). If the queue 50 is empty, the micro-processor 10 returns to the idle loop at step 84 and waits for an instruction from the host computer 4. If the instruction queue 50 is not empty and the micro-processor 10 is in the idle state, the adaptive segment control unit 14 simulates one of the instructions stored in the queue on the virtual cache tables 52 and 54 (step 88). After one instruction has been simulated, the adaptive segment control unit 14 stores the resulting cache hit and cache miss information for the virtual cache tables 52 and 54 (step 89). The micro-processor 10 returns to the step 86 to determine whether there are any instructions left in the instruction queue 50. If so, the next instruction is simulated at step 88. This process is repeated until the number of simulated instructions is equal to the simulation count, such as one hundred.

If an instruction is received from the host computer 4 during simulation of a stored instruction, the micro-processor 10 interrupts the simulation at step 90. The adaptive segment control unit 14 saves the state of the simulation so that it can be resumed after the received instruction is executed. The micro-processor 10 returns to step 72 to decode and execute the received instruction. After the instruction has been executed at step 78, the adaptive segment control unit 14 determines, at step 82, that the simulation has been interrupted. The state of the simulation which was stored at step 90 is restored at step 92 and the simulation is resumed at step 88. In this manner, the normal execution of instructions receives the highest priority so that response time is not affected by operation at the adaptive segment control unit 14. The overhead added by the adaptive segment control unit simulation is minimal therefore.

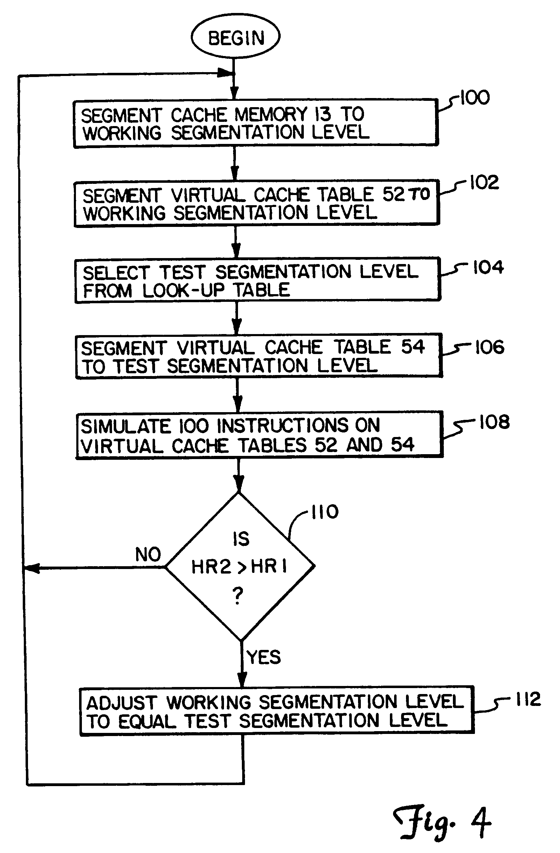

Figure 4 is a flow chart which describes in greater detail the operation of a simulation routine performed by the adaptive segment control unit 14. At step 100, the cache memory 13 is segmented to a selected working segmentation level. The virtual cache table 52 is also segmented to the working segmentation level (step 102). At step 104, the adaptive segment control unit 14 selects the test segmentation level from the look up table. At step 106 the virtual cache table 54 is segmented to the test segmentation level. Next, the adaptive segment control unit 14 simulates one hundred instructions on the virtual cache tables 52 and 54 (step 108).

The instructions are simulated by removing a stored instruction from the instruction queue 50 and processing that instruction on the virtual cache table 52 and 54. For example, with a read instruction, the adaptive segment control unit 14 determines how many of the requested blocks of data are a cache hit and how many are a cache miss in each virtual cache table 52 and 54. Write instructions are also processed on the virtual cache tables 52 and 54. Any addresses written by the write instructions are flushed in each cache table. The number of cache hits and cache misses are summed over the simulation count of one hundred instructions.

Upon completion of the simulation, the ratio of cache hits to cache misses of the virtual cache table 52 (hit ratio value HR1) is compared at step 110 with that of the virtual cache table 54 (hit ratio value HR2). If the hit ratio value HR2 is greater than the hit ratio value HR1, the working segmentation level is adjusted to equal the test segmentation level at step 112. The simulation routine then returns to steps 100 and 102 to segment the cache memory 13 and the virtual cache table 52 to the new working segmentation level. A new test segmentation level is selected from the look up table at step 104. The virtual cache table 54 is re-configured to the new test segmentation level at step 106.

If the hit ratio value HR2 is not greater than the hit ratio value HR1, the working segmentation level is not changed. The cache memory 13 and the virtual cache table 52 remain at the previous working segmentation level. A new test segmentation level is selected from the look up table at step 104 and the virtual cache table 54 is re-configured to the new test segmentation level at step 106.

The simulation sub-routine shown in Figure 4 is continuously repeated so that if the instruction pattern produced by the host computer 4 changes, the adaptive segment control of the present invention will adjust the working segmentation level accordingly. As a result, the performance of the cache memory 13 is improved by segmentation regardless of the particular software application being run by the host computer 4. The adaptive segment control of the present invention is also more accurate and reliable than other segment control approaches, such as Heuristic programming, because the present invention uses a simulation approach on actual, current instructions, rather than pre-selected statistical rules. Further, the overhead added by the preferred embodiment is minimal because simulation is performed while the memory controller is idle and does not require any attention from the host computer.

## Claims

1. A method of controlling a cache memory (13) in a storage system (2,6), comprising:
segmenting the cache memory into a number of segments (30) of equal size to operate at a selected working segmentation level, the segmentation level corresponding to the number of segments;
receiving memory instructions transmitted by a host computer (4); characterised by:
storing the received instructions in an instruction queue (50);
configuring a first virtual cache table (52) to operate at the selected working segmentation level;
configuring at least one further virtual cache table (54) to operate at a selected test segmentation level, the test segmentation level(s) being different from the working segmentation level;
performing hit ratio simulations on the first and further virtual cache tables by executing a selected number of the stored instructions, to determine which virtual cache table obtains a highest hit ratio based upon the stored instructions; and
adjusting the working segmentation level to equal the segmentation level of the virtual cache table having the greater/greatest hit ratio value.

2. A method according to claim 1, wherein determining which virtual cache table obtains a highest hit ratio comprises:
determining a hit ratio for each virtual cache table (52,54) based upon the stored instructions; and
comparing the hit ratios for the virtual cache tables.

3. A method according to claim 1 or claim 2, wherein configuring the at least one further virtual cache table (54) comprises selecting the test segmentation level from entries within a look up table, which includes all selectable segmentation levels.

4. A method according to claim 3, wherein the steps of configuring the first and further virtual cache tables, performing hit ratio simulations, and selecting a new working segmentation level, are repeated.

5. A method according to any one of the preceding claims, wherein the instruction queue (50) is flushed after the number of stored instructions becomes equal to a queue limit and storing the instructions is repeated after the number of instructions received subsequently from the host computer becomes equal to a wait count.

6. A method according to claim 5, wherein performing hit ratio simulations comprises:
executing one of the stored instructions on the first and further virtual cache tables when the instruction queue contains at least one stored instruction and the storage system is in an idle state;
repeating the step of executing one of the stored instructions until the selected number of stored instructions has been executed; and
returning the storage system to the idle state when the instruction queue is empty.

7. A method according to claim 6, wherein
execution of the stored instructions is suspended upon receipt of an instruction from the host computer;
a memory operation is performed on the storage system in response to the received instruction; and
execution of the stored instructions is resumed upon completion of the memory operation.

8. An adaptive segment control assembly for controlling a multi-segment cache memory (13) in a storage system (2,6); the assembly comprising:
means (10) for segmenting the cache memory (13) into a number of segments (30) of equal size to operate at a selected working segmentation level, where the segmentation level corresponds to the number of segments;
means for receiving memory instructions transmitted by a host computer (4); characterised by:
means (10) for storing the received instructions in an instruction queue (50);
means (10) for configuring a first virtual cache table (52) to operate at the selected working segmentation level;
means (10) for configuring at least one further virtual cache table (54) to operate at a selected test segmentation level, the test segmentation level(s) being different from the working segmentation level;
means (10) for performing hit ratio simulations on the first and further virtual cache tables by executing a selected number of the stored instructions to determine which virtual cache table obtains a highest hit ratio based upon the stored instructions; and
means (10) for adjusting the working segmentation level to equal the segmentation level of the virtual cache table having the greater/greatest hit ratio value.

9. An adaptive segment control assembly as claimed in claim 8, wherein the means for performing hit ratio simulations determines a hit ratio for each virtual cache table based upon the stored instructions; and
further comprising means connected to the virtual cache tables for determining which virtual cache table obtains a higher/highest hit ratio.

10. An adaptive segment control assembly as claimed in claim 9, including a look-up table having all selectable segmentation levels, from which said test segmentation level(s) is/are selected.

11. An adaptive segment control assembly as claimed in any one of claims 8 to 10, further comprising means (10) for flushing said instruction queue, after the number of stored instructions equals a queue limit, and storing further instructions after the number of instructions received subsequently from the host computer is equal to a wait count.

## Patentansprüche

1. Verfahren zur Steuerung eines Cache-Speichers (13) in einem Speichersystem (2, 6), mit den folgenden Schritten:
Segmentierung des Cache-Speichers in eine Anzahl von Segmenten (30) mit gleicher Größe für einen Betrieb bei einem ausgewählten Arbeits-Segmentierungsgrad, wobei der Segmentierungsgrad der Anzahl von Segmenten entspricht,
Empfang von von einem Hauptcomputer (4) ausgesandten Speicherbefehlen gekennzeichnet durch:
Speichern der empfangenen Befehle in einer Befehls-Warteschlange (50),
Konfigurieren einer ersten virtuellen Cache-Tabelle (52) für einen Betrieb mit dem ausgewählten Arbeits-Segmentierungsgrad,
Konfigurieren von zumindest einer weiteren virtuellen Cache-Tabelle (54) für einen Betrieb bei einem ausgewählten Test-Segmentierungsgrad, wobei der Test-Segmentierungsgrad oder die Test-Segmentierungsgrade von dem Arbeits-Segmentierungsgrad verschieden sind,
Durchführen von Trefferverhältnis-Simulationen an den ersten und weiteren virtuellen Cache-Tabellen durch Ausführen einer ausgewählten Anzahl der gespeicherten Befehle, um festzustellen, welche virtuelle Cache-Tabelle auf der Grundlage der gespeicherten Befehle ein höchstes Trefferverhältnis erzielt, und
Einstellen des Arbeits-Segmentierungsgrades derart, daß er gleich dem Segmentierungsgrad der virtuellen Cache-Tabelle ist, die den größeren/größten Trefferverhältnis-Wert hat.

2. Verfahren nach Anspruch 1, bei dem die Feststellung, welche virtuelle Cache-Tabelle ein höchstes Trefferverhältnis ergibt, folgendes umfaßt:
Bestimmen eines Trefferverhältnisses für jede virtuelle Cache-Tabelle (52, 54) auf der Grundlage der gespeicherten Befehle, und
Vergleichen der Trefferverhältnisse für die virtuellen Cache-Tabellen.

3. Verfahren nach Anspruch 1 oder 2, bei dem die Konfiguration der zumindest einen weiteren virtuellen Cache-Tabelle (54) die Auswahl des Test-Segmentierungsgrades aus Einträgen in einer Nachschlagetabelle umfaßt, die alle auswählbaren Segmentierungsgrade einschließt.

4. Verfahren nach Anspruch 3, bei dem die Schritte der Konfiguration der ersten und der weiteren virtuellen Cache-Tabellen, der Durchführung der Trefferverhältnis-Simulationen und der Auswahl eines neuen Arbeits-Segmentierungsgrades wiederholt werden.

5. Verfahren nach einem der vorhergehenden Ansprüche, bei dem die Befehls-Warteschlange (50) freigemacht wird, nachdem die Anzahl der gespeicherten Befehle gleich einem Warteschlangen-Grenzwert wird, und bei dem die Speicherung der Befehle wiederholt wird, nachdem die Anzahl der nachfolgend von dem Hauptcomputer empfangenen Befehle gleich einer Warte-Zählung wird.

6. Verfahren nach Anspruch 5, bei dem die Durchführung der Trefferverhältnis-Simulationen folgendes umfaßt:
Ausführen eines der gespeicherten Befehle an den ersten und weiteren virtuellen Cache-Tabellen, wenn die Befehls-Warteschlange zumindest einen gespeicherten Befehl enthält und das Speichersystem sich in einem Leerlaufzustand befindet,
Wiederholen des Schrittes der Ausführung eines der gespeicherten Befehle, bis die ausgewählte Anzahl von gespeicherten Befehlen ausgeführt wurde, und
Rückführen des Speichersystems auf den Leerlaufzustand, wenn die Befehls-Warteschlange leer ist.

7. Verfahren nach Anspruch 6, bei dem:
die Ausführung der gespeicherten Befehle bei Empfang eines Befehls von dem Hauptcomputer suspendiert wird,
eine Speicheroperation an dem Speichersystem in Abhängigkeit von dem empfangenen Befehl ausgeführt wird, und
die Ausführung der gespeicherten Befehle bei Abschluß der Speicheroperation wieder aufgenommen wird.

8. Adaptive Segment-Steuerbaugruppe zum Steuern eines Mehrsegment-Cache-Speichers (13) in einem Speichersystem (2, 6), wobei die Baugruppe folgendes umfaßt:
Einrichtungen (10) zum Segmentieren des Cache-Speichers (13) in eine Anzahl von Segmenten (30) mit gleicher Größe zum Betrieb bei einem ausgewählten Arbeits-Segmentierungsgrad, wobei der Segmentierungsgrad der Anzahl der Segmente entspricht,
Einrichtungen zum Empfang von Speicherbefehlen, die von einem Hauptcomputer (4) ausgesandt werden,
gekennzeichnet durch:
Einrichtungen (10) zum Speichern der empfangenen Befehle in einer Befehls-Warteschlange (50),
Einrichtungen (10) zum Konfigurieren einer ersten virtuellen Cache-Tabelle (52) zum Betrieb mit dem ausgewählten Arbeits-Segmentierungsgrad,
Einrichtungen (10) zur Konfiguration von zumindest einer weiteren virtuellen Cache-Tabelle (54) zum Betrieb bei einem ausgewählten Test-Segmentierungsgrad, wobei der Test-Segmentierungsgrad oder die Test-Segmentierungsgrade von dem Arbeits-Segmentierungsgrad verschieden sind,
Einrichtungen (10) zur Durchführung von Trefferverhältnis-Simulationen an den ersten und weiteren virtuellen Cache-Tabellen durch Ausführen einer ausgewählten Anzahl der gespeicherten Befehle, um festzustellen, welche virtuelle Cache-Tabelle das höchste Trefferverhältnis auf der Grundlage der gespeicherten Befehle ergibt, und
Einrichtungen (10) zur Einstellung des Arbeits-Segmentierungsgrades derart, daß er gleich dem Segmentierungsgrad der virtuellen Cache-Tabelle ist, die den größeren/größten Trefferverhältnis-Wert hat.

9. Adaptive Segment-Steuerbaugruppe nach Anspruch 8, bei der die Einrichtung zur Durchführung der Trefferverhältnis-Simulationen ein Trefferverhältnis für jede virtuelle Cache-Tabelle auf der Grundlage der gespeicherten Befehle bestimmt, und
wobei weiterhin Einrichtungen vorgesehen sind, die mit den virtuellen Cache-Tabellen verbunden sind, um festzustellen, welche virtuelle Cache-Tabelle das höhere/höchste Trefferverhältnis ergibt.

10. Adaptive Segment-Steuerbaugruppe nach Anspruch 9, die eine Nachschlagetabelle einschließt, die alle auswählbaren Segmentierungsgrade enthält und aus der der Test-Segmentierungsgrad oder die Test-Segmentierungsgrade ausgewählt wird bzw. werden.

11. Adaptive Segment-Steuerbaugruppe nach einem der Ansprüche 8-10, die weiterhin Einrichtungen (10) zum Freimachen der Befehls-Warteschlange nach dem Erreichen eines Warteschlangen-Grenzwertes durch die Anzahl von gespeicherten Befehlen und zur Speicherung weiterer Befehle umfaßt, nachdem die Anzahl der nachfolgend von dem Hauptcomputer empfangenen Befehle gleich einer Warte-Zählung ist.

## Revendications

1. Procédé de commande d'un cache-mémoire (13) dans un système de stockage (2, 6), comprenant:
la segmentation du cache-mémoire en un certain nombre de segments (30) de taille égale pour fonctionner à un niveau de segmentation de travail sélectionné, le niveau de segmentation correspondant au nombre de segments;
la réception d'instructions de mémoire transmises par un ordinateur central (4) ; caractérisé par :
le stockage des instructions reçues dans une file d'attente d'instructions (50);
la configuration d'une première table de cache virtuelle (52) pour fonctionner au niveau de segmentation de travail sélectionné ;
la configuration d'au moins une table de cache virtuelle supplémentaire (54) pour fonctionner à un niveau de segmentation de test sélectionné, le(s) niveau(x) de segmentation de test étant différent(s) du niveau de segmentation de travail ;
l'exécution de simulations de rapports de réponses sur la première table et sur la table supplémentaire de cache virtuelles en exécutant un nombre sélectionné des instructions stockées, pour déterminer quelle table de cache virtuelle obtient un rapport de réponses le plus élevé sur la base des instructions stockées ; et
l'ajustement du niveau de segmentation de travail pour égaliser le niveau de segmentation de la table de cache virtuelle ayant une valeur de rapport de réponses plus grande/la plus grande.

2. Procédé selon la revendication 1, dans lequel la détermination de la table de cache virtuelle qui obtient un rapport de réponses le plus élevé comprend :
la détermination d'un rapport de réponses pour chaque table de cache virtuelle (52, 54) sur la base des instructions stockées; et
la comparaison des rapports de réponses pour les tables de cache virtuelles.

3. Procédé selon la revendication 1 ou la revendication 2, dans lequel la configuration de ladite au moins une table de cache virtuelle supplémentaire (54) comprend la sélection du niveau de segmentation de test à partir d'entrées dans une table de consultation, qui comprend tous les niveaux de segmentation pouvant être sélectionnés.

4. Procédé selon la revendication 3, dans lequel les étapes de configuration de la première table et de la table supplémentaire de cache virtuelles, d'exécution de simulations de rapports de réponses, et de sélection d'un nouveau niveau de segmentation de travail, sont répétées.

5. Procédé selon l'une quelconque des revendications précédentes, dans lequel la file d'attente d'instructions (50) est égalisée après que le nombre d'instructions stockées devient égal à une limite de file d'attente et le stockage des instructions est répété après que le nombre d'instructions reçues ensuite en provenance de l'ordinateur central devient égal à un compte d'attente.

6. Procédé selon la revendication 5, dans lequel l'exécution de simulations de rapports de réponses comprend :
l'exécution de l'une des instructions stockées sur la première table et sur la table supplémentaire de cache virtuelles lorsque la file d'attente d'instructions contient au moins une instruction stockée et lorsque le système de stockage est dans un état libre ;
la répétition de l'étape d'exécution de l'une des instructions stockées jusqu'à ce que le nombre sélectionné d'instructions stockées ait été exécuté ; et
le retour du système de stockage à l'état libre lorsque la file d'attente d'instructions est vide.

7. Procédé selon la revendication 6, dans lequel :
l'exécution des instructions stockées est suspendue lors de la réception d'une instruction en provenance de l'ordinateur central ;
une opération de mémoire est effectuée sur le système de stockage en réponse à l'instruction reçue ; et
l'exécution des instructions stockées est reprise lors de l'achèvement de l'opération de mémoire.

8. Ensemble adaptatif de commande de segment pour commander un cache-mémoire (13) à segments multiples dans un système de stockage (2, 6), l'ensemble comprenant :
des moyens (10) pour segmenter le cache-mémoire (13) en un certain nombre de segments (30) de taille égaie pour fonctionner à un niveau de segmentation de travail sélectionné, dans lesquels le niveau de segmentation correspond au nombre de segments ;
des moyens pour recevoir des instructions de mémoire transmises par un ordinateur central (4) ; caractérisé par :
des moyens (10) pour stocker les instructions reçues dans une file d'attente d'instructions (50) ;
des moyens (10) pour configurer une première table de cache virtuelle (52) pour fonctionner au niveau de segmentation de travail sélectionné ;
des moyens (10) pour configurer au moins une table de cache virtuelle supplémentaire (54) pour fonctionner à un niveau de segmentation de test sélectionné, le(s) niveau(x) de segmentation de test étant différent(s) du niveau de segmentation de travail ;
des moyens (10) pour exécuter des simulations de rapports de réponses sur la première table et sur la table supplémentaire de cache virtuelles en exécutant un nombre sélectionné des instructions stockées, pour déterminer quelle table de cache virtuelle obtient un rapport de réponses le plus élevé sur la base des instructions stockées ; et
des moyens (10) pour ajuster le niveau de segmentation de travail pour égaliser le niveau de segmentation de la table de cache virtuelle ayant une valeur de rapport de réponses plus grande/la plus grande.

9. Ensemble adaptatif de commande de segment selon la revendication 8, dans lequel les moyens pour exécuter des simulations de rapports de réponses déterminent un rapport de réponses pour chaque table de cache virtuelle sur la base des instructions stockées ; et
comprenant de plus des moyens reliés aux tables de cache virtuelles pour déterminer quelle table de cache virtuelle obtient un rapport de réponses plus grand/le plus grand.

10. Ensemble adaptatif de commande de segment selon la revendication 9, comprenant une table de consultation ayant des niveaux de segmentation pouvant tous être sélectionnés, à partir desquels le(s)dit(s) niveau(x) de segmentation de test est/sont sélectionné(s).

11. Ensemble adaptatif de commande de segment selon l'une quelconque des revendications 8 à 10, comprenant de plus des moyens (10) pour égaliser ladite file d'attente d'instructions, après que le nombre d'instructions stockées devient égal à une limite de file d'attente, et pour stocker des instructions supplémentaires après que le nombre d'instructions reçues ensuite en provenance de l'ordinateur central est égal à un compte d'attente.
